# EUROPEAN PATENT APPLICATION

(11) **EP 1 625 783 A1**
(43) Date of publication of application: **15.02.2006**
(21) Application number: 04729664.5
(22) Date of filing: 27.04.2004
(51) Int. Cl.: A01D 46/26

(54) **ROD/GUIDE ASSEMBLY FOR RECIPROCATING ROD**

(30) Priority: 29.04.2003 ES 200301058 U
(71) Applicant: Gurri Molins, José, 08140 Caldes de Montbui (Barcelona) (ES)
(72) Inventor: Gurri Molins, José, 08140 Caldes de Montbui (Barcelona) (ES)
(74) Representative: Gislon, Gabriele
(86) International application number: PCT/ES2004/000179
(87) International publication number: WO 2004/095909

(57) **Abstract**

The assembly integrated onto a support structure (13) that houses a driving assembly (17) connecting a vibration-generating mechanism (18) designed to convert rotation movement into a linear reciprocating movement. A rod (3) is connected to the output of said vibration-generating mechanism (18) by a coupling device permitting a free rotation of the rod (3) about its axis. The rod (3) has an operation member (22) at one distal end and has a portion linearly guided in a rod-guiding member (4) secured to the support structure (13) by means permitting free rotation thereof in both directions. Rotation-linking means are used for linking the rotation of said rod-guiding member (4) to a rotation of the rod (3) wile allowing at the same time the rod (3) to carry out said linear reciprocating movement in said axial direction.

## Description

### Scope of the invention

This invention relates to a rod-guiding assembly for a reciprocating rod comprising securing means for securing a rod-guiding member to a support structure permitting the rod-guiding member freely rotate in both directions with respect to said support structure and rotation-linking means for linking the rotation of said rod-guiding member to a rotation of the reciprocating rod and at the same time allowing the rod to effect said linear reciprocating movement in said axial direction.

The invention is particularly, although not exclusively, applicable to portable, mechanical shaking harvester designed for the collection of fruit from trees, such as olives and almonds.

### Background to the invention

In a generic manner, this type of apparatus comprises a support structure, such as a chassis, casing or box, to which a motor or power takeoff is attached, said motor or power takeoff is attached being connected by means of centrifuge clutch to a vibration-generating mechanism, which is adapted to convert the rotating motor movement into a linear reciprocating vibrating movement. A rod having at least one portion linearly guided with respect to said support structure is connected to the output of said vibration-generating mechanism and an operation member is fixed to a free distal end of said rod.

A junction device is known for connecting two sections of a rod to permit a free relative rotation therebetween and, at the same time, transmit axial forces in both directions. Utility model application ES-A-1052281 describes a device of the type described above, although applicable to a rod supporting and transmitting drive rotating force. However, the free rotation of a rod applied to an apparatus in which the rod is provided with reciprocating movement and carries an operation member, does not permit to control the orientation of said operation member.

Utility model application ES-A-1052630 describes a torsion limiting device in a mechanism that transforms rotating movement into linear reciprocating movement or vice versa, which includes a rolling element located between two facing parallel tracks. However, this device is applied to protect said transforming mechanism and not to linking the rod rotation thereto.

There is a need for a rod-guiding assembly for a reciprocating rod that enables the operator to control the orientation of the operation member, for example, a hook in a portable mechanical shaking harvester by means of manual rotation of the rod-guiding member without having to rotate the entire machine unit.

### Description of the invention

This invention meets this need by providing a rod-guiding assembly for a reciprocating rod that is applicable, for example, to a vibration-generating apparatus of the type previously described. The assembly of the invention comprises the combination of a rod-coupling device that provides rotation of the rod with respect to a driving assembly mounted on a support structure of the apparatus, a system for securing a rod-guiding structure, such as a rod-guiding member or supporting and protecting tube, to said support structure permitting free rotation in both directions of the rod-guiding member with respect to said support structure, and rotation-linking means to link the rotation of the rod-guiding tubular structure to the rotation of the rod, allowing at the same time said reciprocating movement of the rod in the axial direction. In this way, an operator can orientate the operation member fixed to one end of the rod by manually rotating the rod-guiding member with respect to the support structure of the apparatus. For greater ease and precision of control, a handle is fixed to the rod-guiding member, which is not affected by the reciprocating vibrations of the rod.

### Brief description of the drawings

The previous and other features of the invention will become clearer from the following description of an exemplary embodiment illustrated in the accompanying drawings, which should be taken as non-limiting example.

In the attached drawings:
Fig. 1 is a schematic, partially sectioned lateral elevation view of a portable shaking harvester to which the assembly of this invention is applied;
Fig. 2 is an enlarged, partial sectioned view showing the securing means for securing the tubular structure to the support structure in a closed situation;
Fig. 3 shows the same components as Fig. 2, but with the securing means in an open situation;
Fig. 4 shows an enlarged, partial sectioned view of the rotation-linking means;
Fig. 5 is a transversal cross-section view taken along plane V-V of Fig. 4;
Fig. 6 is a transversal cross-section view taken along plane VI-VI of Fig. 5;
Fig. 7 is a transversal cross-section view taken along plane VII-VII of Fig. 8;
Fig. 8 is an enlarged longitudinal cross-section view of a portion of the rod and the rod-guiding member of the assembly shown in Fig. 1 in the form of a tubular structure; and
Figs. 9 and 10 are transversal cross-section views, similar to that of Fig. 7, which show other two embodiment variations of the rod-guiding member.

### Detailed description of an exemplary embodiment

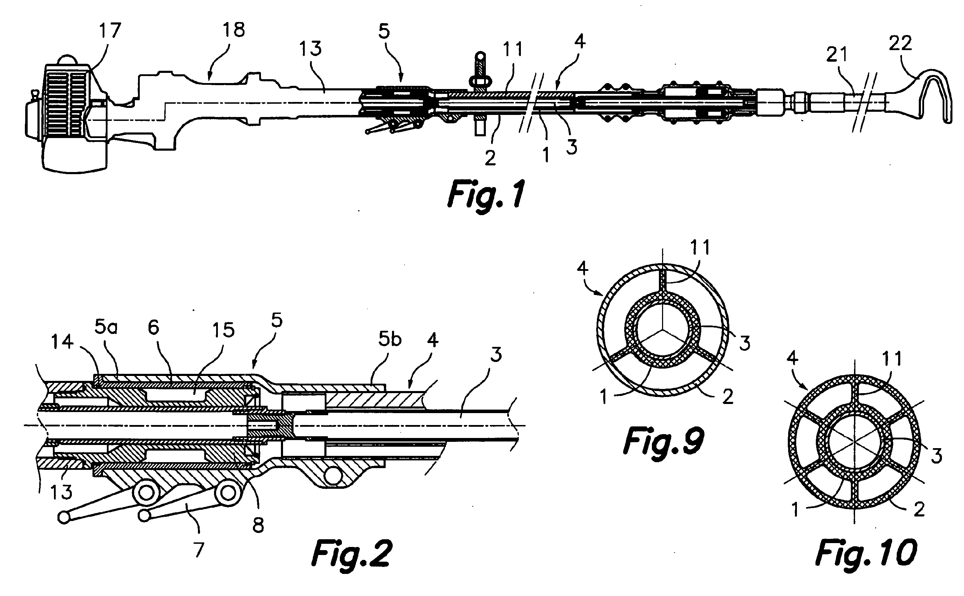

Fig. 1 shows a rod-guiding assembly for a reciprocating rod in accordance with this invention applied to a portable mechanical harvester, which comprises a support structure 13, such as a chassis or box, which houses a driving assembly 17 connected to a vibration-generating mechanism 18 adapted to convert a rotating movement into a linear reciprocating movement, a rod 3 being connected to the output of said vibration-generating mechanism 18 by means of a coupling device that allows free rotation of said rod 3 about its axis. The rod 3 is provided with at least one portion that is linearly guided in an axial direction with respect to said support structure 13 in a rod-guiding member 4, and with an operation member 22, such as a hook, at the distal end of the rod 3, the hook being adapted to grip a branch or secondary trunk of a tree in order to transmit to it the vibration from the rod 3, the rod having a considerable length.

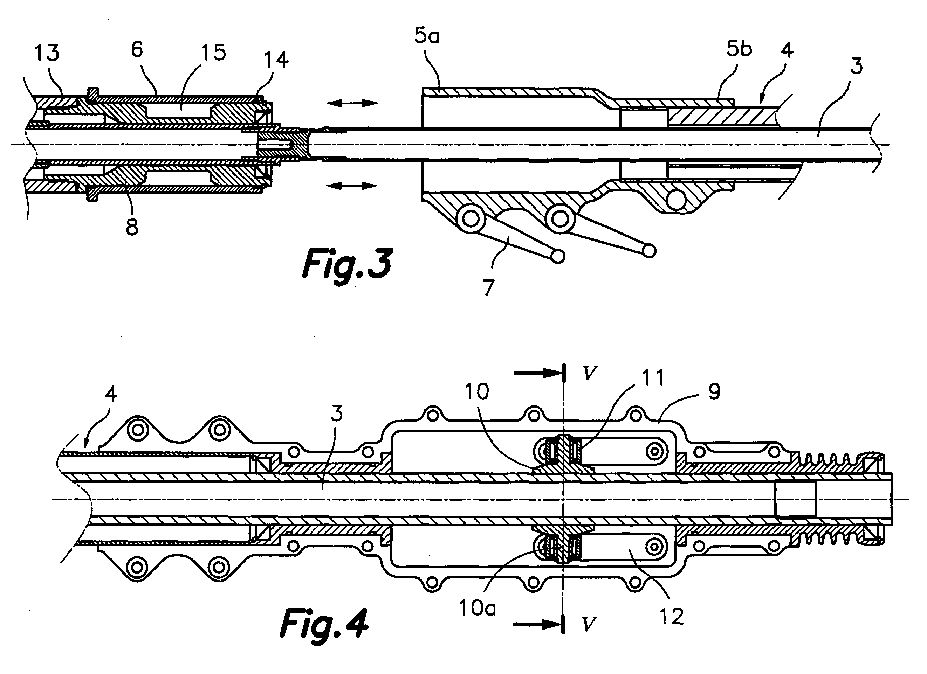

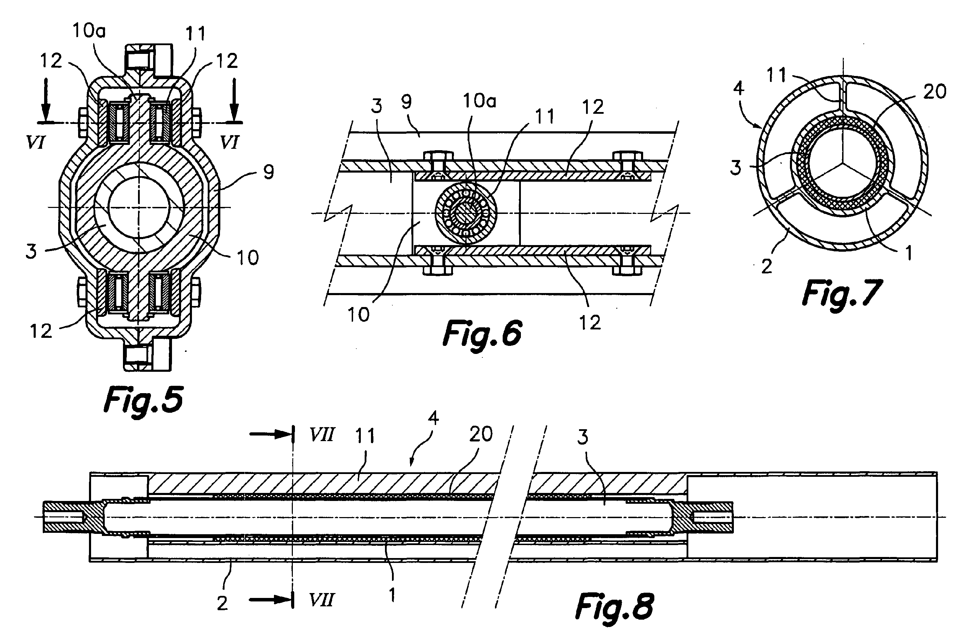

Said rod-guiding assembly 4, in this exemplary embodiment as best seen in Figs 7 and 8, is in the form of a tubular structure 4 and comprises securing means for securing the rod-guiding member 4 to the support structure 13 (Figs. 2 and 3), which permit free rotation of the rod-guiding member 4 in both directions with respect to said support structure 13, and rotation-linking means (Figs. 4, 5 and 6) for linking the rotation of said rod-guiding member 4 to the rotation of the rod 3 and, at the same time, allowing said linear reciprocating movement of the rod 3 in said axial direction.

Figs. 2 and 3 show said securing means for securing the rod-guiding member 4 to said support structure 13, which provide rotation in any direction of the rod-guiding member 4 with respect said support structure 13 and comprise an outer securing structure 5 in the form of a cup 5a at one end, the other end being coupled, for example by plugging, into the rod-guiding member 4. A sleeve 6 is mounted to rotate on a support piece 8 connected at one end to the support structure 13. said sleeve 6 has a low friction coefficient with respect to said support piece 8 onto which it rotates. This is achieved, depending on the exemplary embodiment, either because the sleeve 6 is of a slippery material, or because it is coated with a slippery material, or because, in accordance with the exemplary embodiment shown in the figures, said sleeve 6 is made of a rigid material and comprises inner circumferential slots 14 receiving elastic ring-shaped gaskets applied against the support piece 8. These elastic o-ring seals act as dynamic support elements which, at the same time, provide a slight braking action to the rod-guiding member 4. Eventually, spaces 15 could exist between the sleeve 6 and the support piece 8 that could be filled with a lubricant material, such as grease or oil and, in order to prevent said lubricant material from overflowing, elastic seals, similar to those previously described, would be included.

The coupling of the outer securing structure 5 connected to the rod-guiding member 4 to the sleeve 6 is achieved by means of a quick-action locking system that clamps on the sleeve 6, said quick-action locking system comprising at least one clamp operated by a lever 7. Obviously, this locking system may be of any other type known in the previous art apart from the one mentioned, for example, one based on clamps.

Everything described in the previous paragraphs refers to the means that allow the rod-guiding member 4 to rotate with respect to the support structure 13. As has already been stated, the rod 3 has a linear reciprocating movement achieved via the driving assembly 17, which can include a conventional device chosen, for example, from those described in documents FR-A-2305927, US-A-3924390 and ES-A-1000523. It should be stressed that in this invention, the rod 3 can also freely rotate axially with respect to the driving assembly 17 and, consequently with respect to the support structure 13, employing a conventional device designed for this purpose, such as the one described in utility model ES-A-1052281.

The device that permits rotation of the rod 3 is not the objective of this invention. On the contrary, the objective of the invention is achieving that rotation of the rod 3 is linked to the rotation of the previously described rod-guiding member 4. To this purpose said rotation-linking means are presented (see Figs. 4, 5 and 6), which link the rotation of the rod-guiding member 4 to the rotation of the rod 3 while permitting at the same time the rod 3 to carry out said reciprocating movement in the axial direction. Said rotation-linking means comprise an outer structure 9 connected to the rod-guiding member 4 and which cooperates with an auxiliary element 10 coupled to the rod 3 in order to define a guide in the direction of the reciprocating movement. Said outer structure 9 is divided, in the exemplary embodiment shown in Fig. 4, into two sections in the form of half-boxes trapping therein the rod-guiding member 4 by clamping. Two pairs of parallel, facing tracks 12 are attached to the outer structure 9, and said auxiliary element 10 secured to the rod 3 has two appendices 10a on which corresponding rolling elements 11, such as bearings, are seated (see Fig. 6). Each of the rolling elements 11 is located between a respective pair of tracks 12 and arranged to roll along one or the other track 12 of the corresponding pair, thus limiting the rotation of rod 3 with respect to the rod-guiding member 4 in one or the other direction, respectively. It is important that the tracks 12 are located at a distance that is greater than the diameter of the rolling element 11, providing a clearance between the rolling element 11 and the tracks 12 which is necessary for making that each rolling element 11 only touches one of the two tracks 12 associated therewith and, in this manner, can freely roll. If this is not so, meaning that the rolling element 11 is touching both tracks 12, then the rolling elements 11 would be braked. In another exemplary embodiment (not shown) wherein instead of rolling elements 11 sliding elements, such as two-sided skids are employed, then this clearance between the tracks 12 and the sliding elements would not be required.

Although not illustrated in the figures, the rotation-linking device could comprise only a pair of parallel, facing tracks, together with a single rolling or sliding element set therebetween, or two separate tracks and two respective rolling or sliding elements mounted on two appendices that are independent of the auxiliary element fixed to the rod.

The previously described common rotation of the tubular structure 4 and rod 3 is produced by the operator manipulating a handle 16 arranged on the rod-guiding member 4, which could include a conventional vibration damping system to protect the operator from the same, such as the system proposed in utility model application ES-A-1040858.

In the present exemplary embodiment, the rod 3 is divided into two or more sections coupled together which are of different wall thicknesses, diameters, materials and lightness as a function of the requirements of each section. This division facilitates transportation and the separation of the system into modules or accessories, which will facilitate interchange and independence between them in the case of any of them suffering damage or needing to be replaced.

Figs. 7 and 8 show in greater detail a rod-guiding member 4 in the form of a tubular structure 4 that is a part of the rod support and guide assembly in accordance with this invention. The mentioned tubular structure 4 comprises at least a first tubular wall 1, inside of which are housed linear-guiding means for guiding a rod 3 to effect a reciprocating movement in an axial direction, and securing means to connect said tubular structure 4 to a support structure 13, such as a chassis or box, of a driving assembly 17 for said rod 3. Said tubular structure 4 comprises a second tubular wall 2 arranged coaxially around said first tubular wall 1 at a distance therefrom and two or more longitudinal ribs 11 (in the exemplary embodiment shown in Figs. 7 and 8, there are three ribs), distributed in a equidistant fashion, the longitudinal ribs 11 extending radially to connect the first tubular wall 1 with the second tubular wall 2, as shown in Figs. 7 and 8. In order to facilitate the sliding movement of the rod 3 inside of the tubular structure 4, a core of anti-friction, sliding material 20 is located, for this purpose, between the first tubular wall 1 of the tubular structure 4 and the rod 3 (see Fig. 7).

The previously mentioned configuration of the tubular structure 4, it is to say, that fact that it comprises two walls joined by a series of ribs 11, means that the structure can be manufactured using a relatively light material and with a relatively thin wall, which provides a very good ration between the lightness of the tubular structure 4 and the moment of inertia or flexion strength.

It should be pointed out that with this tubular structure 4, used as a rod-guiding member, a rod bare section 21 of the rod has a length that is less than one third of the total assembly length, which provides an idea as to what extent the rod 3 is protected, whether by the tubular structure 4, the securing structure 5, or the exterior coupling structure 9, which means that the section of the rod 3 that is protected can be slimmer and/or made of a lighter material than those employed in the cited background, since it is subjected to forces (bending, compression, traction and sagging) that are much less than those suffered by the same before proposing the tubular structure 4 of this invention and this greater lightness of the rod 3 also produces much lesser inertia.

It is evident that everything explained to this point with respect to the rotation of rod 3 and the rod-guiding member 4 and its common coupling would be perfectly applicable whatever type of rod-guiding member 4 is employed, such as for example a supporting and protecting tube.

Fig. 9 shows an embodiment variant for the tubular structure of the rod-guiding member 4, in which said first tubular wall 1 is made of a sliding, anti-friction material and acts as said linear-guiding means for the rod 3. The mentioned two or more longitudinal ribs 11 are integral with the first tubular wall 1 and their ends mate with an inner surface of the second tubular wall 2, which is made of a light, but strong material. Although not shown, the longitudinal ribs 11 would be integral with the second tubular wall 2, with their ends mating with an outer surface of the first tubular wall 1, producing an equivalent result.

Fig. 10 shows an embodiment variant of the tubular structure of the rod-guiding member 4, in which the first tubular wall 1, the second tubular wall 2 and the two or more longitudinal ribs 11 form a single piece of anti-friction sliding material. Again, in this case, the first tubular wall 1 acts as said linear-guiding means for rod 3.

One skilled in the art would be able to introduce changes and modifications in the described exemplary embodiment without departing from the scope of the invention as defined in the attached claims.

## Claims

1. A rod-guiding assembly for a reciprocating rod, of the type that is integrated to a support structure (13), such as a chassis or box, housing a driving assembly (17) connected to a vibration-generating mechanism (18) which is adapted to convert a rotating movement into a linear reciprocating movement, a rod (3) being connected to the output of said vibration-generating mechanism (18) by means of a coupling device that permits free rotation of said rod (3) on its axis, the rod (3) being provided with at least one portion linearly guided in an axial direction with respect to said support structure (13) by a rod-guiding member (4), and an operation member (22) being provided at the distal end of the rod (3), **characterised in that** it comprises:
securing means for securing said rod-guiding member (4) to the support structure (13), said securing means allowing the rod-guiding member (4) to freely rotate in both directions with respect to said support structure (13); and
rotation-linking means for linking the rotation of the rod-guiding member (4) to a rotation of the rod (3) while allowing at the same time the rod (3) to carry out said linear reciprocating movement in said axial direction.

2. A rod-guiding assembly in accordance with claim 1, **characterised in that** said rotation-linking means comprise an outer structure (9) connected to the rod-guiding member (4) and which cooperates with an auxiliary element (10) coupled to the rod (3) in order to define a linear guide in the direction of the reciprocating movement of the rod (3), said linear guide restricting the possibility of relative rotation between the rod (3) and the rod-guiding member (4).

3. A rod-guiding assembly in accordance with claim 2, **characterised in that** at least two tracks (12) are associated with said outer structure (9), said auxiliary element (10) having at least one appendix (10a) on which at least one rolling or sliding element (11) is mounted, said at least one rolling or sliding element (11) being arranged to roll or slide along one and/or the other of said tracks (12).

4. A rod-guiding assembly in accordance with claim 3, **characterised in that** said tracks (12) are facing and parallel to each other, said auxiliary element (10) having an appendix (10a) with a rolling element (11) arranged between the two tracks (12), the two tracks (12) being at a distance from each other that is greater than the diameter of the rolling element (11), thus providing a clearance between the rolling element and the tracks (12).

5. A rod-guiding assembly in accordance with claim 3, **characterised in that** it comprises two pairs of tracks (12) that are facing and parallel to each other and two appendices (10a) with corresponding rolling elements (11) arranged between the two tracks (12) of each pair, said two tracks (12) of each pair being at a distance from each other that is greater than the diameter of the rolling element (11), thus providing a clearance between the rolling element and the tracks (12).

6. A rod-guiding assembly in accordance with claim 3, **characterised in that** said two tracks (12) are separated and said auxiliary element (10) has two appendices (10a) with corresponding rolling elements (11) arranged to roll along one and the other of the tracks (12), respectively.

7. A rod-guiding assembly in accordance with claim 2, **characterised in that** said outer structure (9) comprises two parts in the form of half-boxes trapping therein one end of the rod-guiding member (4) by clamping.

8. A rod-guiding assembly in accordance with claim 1, **characterised in that** said securing means comprise a sleeve (6) rotatably mounted on a support piece (8) joined at one end to the support structure (13) and an outer securing structure (5) coupled at one end (5b) to the rod-guiding member (4), said outer securing structure (5) having a cup-shaped configuration (5a) at the other end coupled and secured to said sleeve (6).

9. A rod-guiding assembly in accordance with claim 10, **characterised in that** said cup-shaped configuration (5a) of the outer securing structure (5) has at least one quick-action clamp operated by a lever (7) to clamp on said sleeve (6).

10. A rod-guiding assembly in accordance with claim 10, **characterised in that** said sleeve (6) is made of a rigid material and includes inner circumferential slots receiving elastic ring-shaped gaskets (14) applied against the support piece (8) and acting as a slight rotational brake for the rod-guiding member.

11. A rod-guiding assembly in accordance with claim 10, **characterised in that** said sleeve (6) is made of a slippery material or is covered by a slippery material.

12. A rod-guiding assembly in accordance with claim 1, **characterised in that** the rod-guiding member (4) comprises at least one handle (16) to jointly rotate the rod-guiding member (4) and rod (3).

13. A rod-guiding assembly in accordance with claim 1, **characterised in that** said rod (3) is divided into two or more sections that are coupled together by releasable couplings.

14. A rod-guiding assembly in accordance with claim 1, **characterised in that** said rod-guiding member (4) is a supporting and protecting tube.

15. A rod-guiding assembly in accordance with claim 1, **characterised in that** said rod-guiding member (4) comprises a tubular structure having a first tubular wall (1) inside of which linear-guiding means for linearly guiding the rod (3) are arranged, a second tubular wall (2) coaxially arranged around said first tubular wall (1) at a certain distance therefrom, and two or more radially extending longitudinal ribs (11) connecting both first and second tubular walls (1, 2).

16. A rod-guiding assembly in accordance with claim 15, **characterised in that** said linear-guiding means for linearly guiding the rod (3) comprise a core of sliding, anti-friction material (20) arranged between said first tubular wall (1) and the rod (3).

17. A rod-guiding assembly in accordance with claim 15, **characterised in that** said first tubular wall (1) is made of a sliding, anti-friction material and acts as said linear-guiding means for linearly guiding the rod (3), said two or more longitudinal ribs (11) being integral either with the first tubular wall (1) or the second tubular wall (2).

18. A rod-guiding assembly in accordance with claim 15, **characterised in that** said first tubular wall (1), said second tubular wall (2) and said two or more longitudinal ribs (11) are integral with one piece of sliding, anti-friction material, the first tubular wall (1) acting as said linear-guiding means for linearly guiding the rod (3).

19. A rod-guiding assembly, in accordance with claim 15, **characterised in that** a bare section (21) of said rod (3) has a length that is less than one third of the total length of the rod (3) assembly.
